# EUROPEAN PATENT APPLICATION

(11) **EP 2 204 682 A2**
(43) Date of publication of application: **07.07.2010**
(21) Application number: 09180984.8
(22) Date of filing: 30.12.2009
(51) Int. Cl.: G02B 6/44

(54) **Improved fiber guide for fiber optic cables**

(30) Priority: 31.12.2008 US 141726 P
(71) Applicant: E. I. Du Pont de Nemours and Company, Wilmington, DE 19898 (US)
(72) Inventor: McNeil, Monty, Midlothian, VA 23112 (US)
(74) Representative: Dannenberger, Oliver Andre

(57) **Abstract**

A fiber guide plate useful in the manufacture of fiber optic cables comprising a plate having an edge, a central circular hole and at least two fiber guide channels arranged at a distance from and at a periphery around said hole, where said channels are connected to said edge with a bore, and where said bore is connected to a gas source.

## Description

### BACKGROUND OF THE INVENTION

### 1. Field of the Invention

This invention is directed to devices for use in making fiber optic cables.

### 2. Description of the Related Art

Fiber optic cables include optical fibers that transmit signals, for example, voice, video, and/or data information. Optical fibers require cabling to protect the relatively fragile silica-based optical fibers and to preserve the optical performance thereof. For example, because optical fibers are not ductile they must be protected from external forces such as tensile forces. Additionally, optical fibers require protection from macro-bending and/or micro-bending to inhibit undesired optical degradation.

In order to meet these requirements, fiber optic cables designed for indoor, outdoor, or indoor/outdoor applications typically have a cable core surrounded by a sheath system that generally includes a cable jacket. For example, a cable core may include an optical fiber, a strength element, and/or a separation layer. The separation layer generally is on the outer surface of the cable core and prevents the extruded cable jacket from sticking to the cable core and/or optical fiber, thereby allowing relative movement between cable jacket and the cable core and/or optical fiber. The relative movement therebetween, for example, during bending and/or flexing of the fiber optic cable inhibits stress and/or strain on the optical fiber, thereby preserving optical performance. Additionally, the cable jacket protects the optical fibers from, for example, environmental effects.

The strength element of a fiber optic cable is intended to carry tensile loads applied to the fiber optic cable inhibiting, for example, tensile stress and/or strain from being applied to the optical fibers within the cable. Different types of strength members may be used in fiber optic cables, for example, metal wires, glass-reinforced plastics, and/or aramid fibers. Fiber optic cables may employ a single type of strength member or combinations of different types of strength members. However, different types of strength members may have different characteristics, for example, glass-reinforced plastic rods and/or metal wires additionally provide an anti-buckling characteristic to the fiber optic cable. However, strength members having anti-buckling characteristics generally increase the stiffness of the fiber optic cable, thereby increasing the bending radius of the fiber optic cable. Thus, fiber optic cables having strength members with anti-buckling characteristics are generally unsuitable for small bend radius applications, for example, splice trays and/or as an interconnect cable assembly.

Fiber optic cables having relatively flexible strength members, instead of stiff strength members, such as aramid fibers are generally more flexible and are suited for, among other applications, interconnect cable assemblies and/or within splice trays. Moreover, relatively flexible strength members may also, among other functions, provide a separation layer between the cable core and the cable jacket. For example, an interconnect cable assembly may include a fiber optic cable having a cable jacket extruded over a cable core with aramid fibers generally surrounding an optical fiber. The aramid fibers may act as both a strength element and a separation layer. The separation layer is a layer of material directly covering the fiber optic fibers or fiber bundles. The purpose of the separation layer is to prevent the fiber optic fibers/bundles from sticking to the cable jacket during manufacture.

### BRIEF DESCRIPTION OF THE DRAWINGS

Figure 1 is a view of a conventional die plate.
Figure 2 is a view of an exemplary device according to the present invention.
Figure 3 is a view of a fiber optic cable made using a device according to the present invention

### DETAILED DESCRIPTION OF THE INVENTION

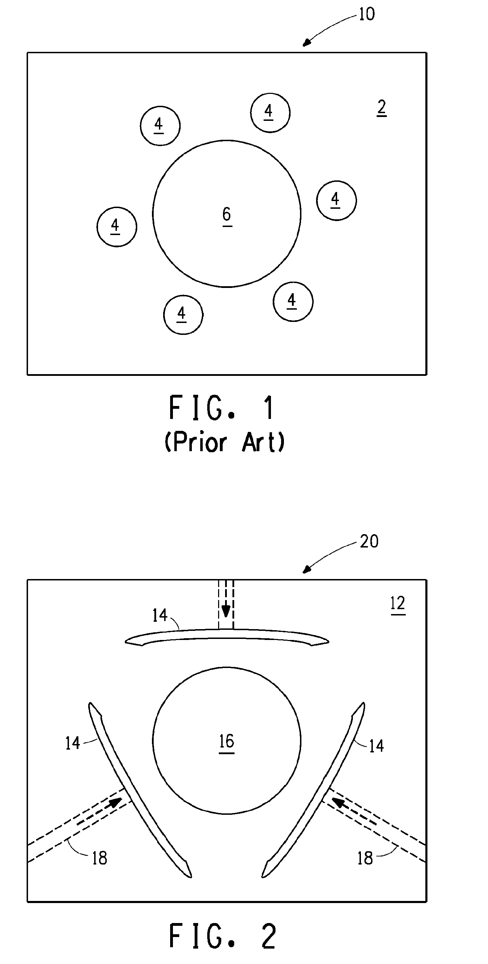

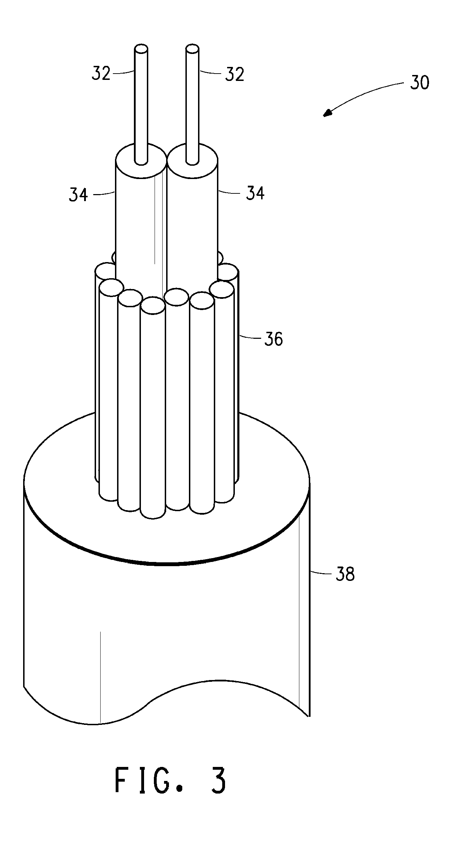

In fiber optic manufacturing technology the layer between the external cable jacket and the fiber optic bundles is called the separation layer and is often made of aramid. In the past, separation layers were formed by several ends of fiber that are spaced evenly around the core cable elements. Currently, cable manufacturers distribute reinforcing fiber evenly around the perimeter of a cable's core elements wherein several individual continuous filament fibers are guided into position prior to the extrusion of an outer jacket to cover the cable. Commonly, a guiding die is used to position the reinforcing fibers around the cable's core elements.
A common problem with the current manufacturing process of fiber optic cables is that the fiber optic bundles sometimes stick to the outside jacket of the cable because some of the aramid separation layer fibers were not adequately dispersed around the fiber optic bundle. The adhesion of the fiber optic bundles to the exterior jacket can produce fracturing of the fiber optic fibers in the bundle when the cable is placed under load.
This invention is directed to a fiber guide plate and air jet system useful to disperse fibers to make separation layers in the fabrication of fiber optic cables. The invention thereby prevents potential destruction of the bundles when the cable is under load.
The subject invention is an improvement over the conventional guide or lay plate 10 used in optical fiber fabrication as depicted in Fig. 1. The invention, as depicted in Fig. 2, is to an apparatus which enables better dispersion of aramid fibers forming the separation layer of the fiber optic bundle. The newly designed guide plate 20 which comprises guide openings 14 in combination with air jets 18 that provide compressed gas to disperse the aramid fibers around the optical elements protecting the fiber optic bundle from contact with the outside cable during manufacture. The subject invention is particularly useful for premises fiber optic cables, that is, those for indoor use or on the premises of a customer. The air jets are incorporated into a slotted guide within the die to promote the spreading of the filaments in a bundle of reinforcing fiber. In addition, the slotted guide uses moving air to further promote the spreading of the filaments. The guide openings can be arcuate, that is bent, curved or arched like a bow. However, the guide openings can also be rectangular or elliptical shaped slots. The guide openings are typically two to six times the thickness of the filaments that are to be spread. A simplified version of a premise cable 30 is depicted in Fig. 3 showing optical fibers 32 that are encased in buffer layers 34, which are further enclosed by a separation layer 36. The cable 30 has an outer jacket 38. The separation layer is shown having a uniform dispersion of fibers. The invention thereby prevents potential destruction of the bundles when the cable is under load.
Improving the placement of the fiber around the core cable elements prevents the outer jacket from coming in contact with the core elements of the cable. The improvement in spreading also enables the used of fewer reinforcing bundles to cover the same core elements of the cable. This can enable the reduction of a cable's total diameter, reducing footprint, material cost and weight of the cable. Another potential benefit would be to use fewer, but larger bundles of filaments to cover the core cable elements.

### Example 1

A conventionally made fiber optic premise cable with 1 single waveguide is surrounded by 6 ends of 400 denier aramid reinforcing fiber such that the total denier of the aramid is 2400 denier.
An alternative is to use four ends of 400 denier with the improved spreading apparatus of the claimed invention to cover the same area. Material costs are lowered, footprint and weight of the cable is reduced.
As such, more of these cables can be bundled together within the same space.

### Example 2

A conventionally made fiber optic premise cable with 1 single waveguide is surrounded by 6 ends of 400 denier aramid reinforcing fiber such that the total denier of the aramid is 2400 denier.
An alternative is to use two ends of 1000 denier with the improved spreading apparatus of the claimed invention to cover the same area. Material costs are lowered, footprint and weight of the cable is reduced. As such, more of these cables can be bundled together within the same space.

## Claims

1. A fiber guide plate useful in the manufacture of fiber optic cables comprising;
a plate having an edge, a central circular hole and at least two fiber guide channels arranged at a distance from and at a periphery around said hole, where said channels are connected to said edge with a bore, and where said bore is connected to a gas source.

2. The fiber guide plate of claim 1, wherein the at least two channels are arcuate.

3. The fiber guide plate of claim 1, wherein the at least two channels are rectangular.

4. The fiber guide plate of claim 1, wherein the at least two channels are elliptical.

5. The fiber guide plate of either one of claims 2, 3 or 4 comprising three channels.
